# EUROPEAN PATENT SPECIFICATION

(11) **EP 2 394 287 B1**
(45) Date of publication and mention of the grant of the patent: **20.03.2013**
(21) Application number: 10715577.2
(22) Date of filing: 01.04.2010
(51) Int. Cl.: H01H 83/14

(54) **RESIDUAL CURRENT SWITCHING DEVICE**
FEHLERSTROM-SCHUTZSCHALTER
DISPOSITIF DE COMMUTATION DE COURANT RÉSIDUEL

(30) Priority: 05.02.2009 GB 0901789; 04.03.2009 GB 0903698
(43) Date of publication of application: 14.12.2011
(73) Proprietor: Nash, Antony Keith, Brackley Northamptonshire NN13 6HH (GB); Barrett, Dale James, Kidlington Oxfordshire OX5 2DZ (GB)
(72) Inventor: NASH, Antony Keith, Northamptonshire NN13 6HH (GB); BARRETT, Dale James, Oxfordshire OX5 2DZ (GB)
(74) Representative: Hocking, Adrian Niall
(86) International application number: PCT/GB2010/050576
(87) International publication number: WO 2010/089612

(56) References cited:
- US-B1- 6 262 871
- US-B1- 7 411 766

## Description

The present invention relates to a residual current switching device, and to an electrical consumer unit having such a device.

Electrical regulations BS7671 requires all residual current devices (RCDs) to be tested quarterly by pressing the test button and then resetting. This is intended to prevent or limit 'mechanical freezing' whereby the switch does not open when a nonzero sum of currents is detected.

By these regulations, more emphasis is now being placed on additional RCD protection for electrical circuits to try and reduce the chance of electric shock and fire.

On average, ten people are killed and more than seven hundred and fifty people are injured due to electric shocks from defective electric circuits and/or subsequent fires. In the cases where an RCD is present, mechanical freezing of the trip switch is often to blame.

It is also inconvenient, especially for businesses, to have testing of an RCD at random times, particularly during office hours and such like which can cause major disruption.

The present invention seeks to provide a solution to these problems.

Document US 6 262 871 discloses a device according to the preamble of claim 1.

According to a first aspect of the invention, there is provided a residual current switching device comprising live and neutral terminals, outgoing load terminals electrically communicable with the respective live and neutral terminals, a switching device between at least one of the live and neutral terminals and its respective outgoing load terminal, a sensing element for sensing a nonzero sum of currents between the said terminals, a sensing circuit for receiving a sensing signal from the sensing element, the sensing circuit controlling the switching device to open based on the sensing signal from the sensing element, a timer circuit for automatically periodically outputting a test signal and having a user interface for manually setting a specific time of day that said periodic test signal is outputted, and a warning circuit having a warning device from which an alert signal is outputable following output of the test signal from the timer circuit.

Preferable and/or optional features of the first aspect of the invention are set forth in claims 2 to 16, inclusive.

According to a second aspect of the invention, there is provided an electrical consumer unit having a residual current switching device in accordance with the first aspect of the invention.

Preferably, the residual current switching device is retro-fittable within a housing of the consumer unit.

The invention will now be more particularly described, by way of example only, with reference to the accompanying drawings, in which :

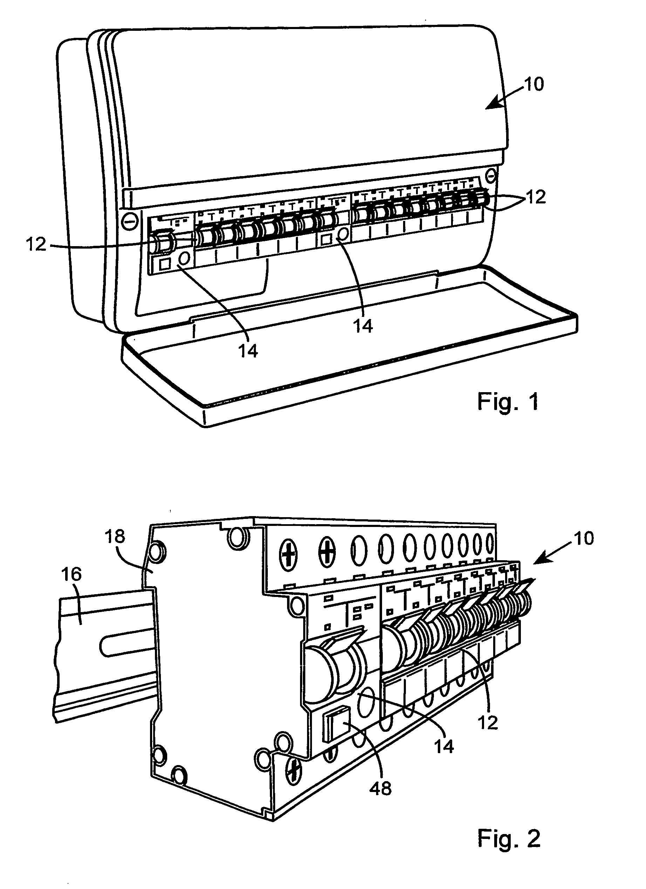

Figure 1 is a perspective view of an electrical consumer unit having one embodiment of a residual current switching device, in accordance with the first aspect of the invention;
Figure 2 is a perspective view showing the consumer unit with unit housing removed;
Figure 3 is a perspective view of the residual current switching device, removed from the electrical consumer unit;
Figure 4 is an exploded view of the residual current switching device; and
Figure 5 is a view from another side of the residual current switching device, with a device housing removed for clarity.

Referring to the drawings, there is shown an electrical consumer unit 10 having a plurality of resettable fuses or breakers 12. A split load arrangement is shown with at least two circuits each being protected by a residual current switching device 14, such as a residual current device or RCD.

Although an RCD is mentioned above, the term 'residual current switching device' may include a ground fault circuit interrupter GFCI, ground fault interrupter GFI, and/or an appliance leakage current interrupter ALCI.

The breakers 12 and the residual current switching devices 14 are preferably mountable on a DIN-rail 16, making for simple removal.

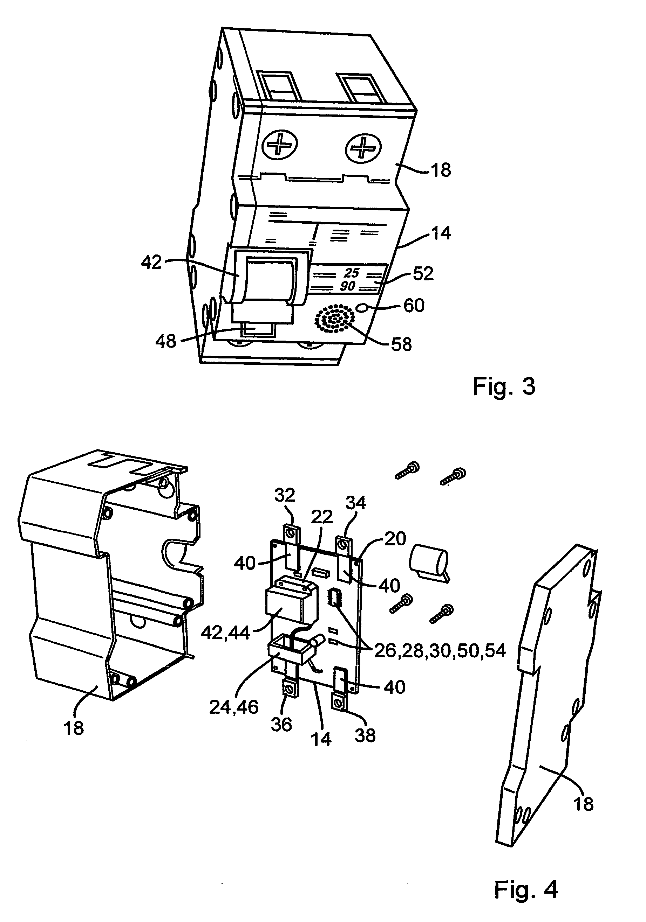

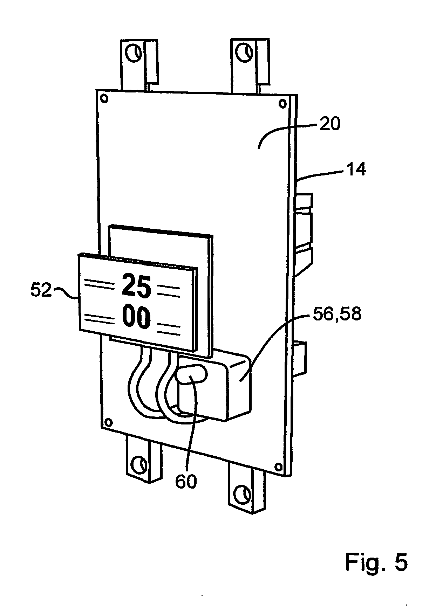

Referring to Figures 3 to 5, the residual current switching device 14 comprises, typically moulded plastics, device housing 18 within which is provided a PCB 20 on which is provided a switching device 22, a sensing element 24, a sensing circuit 26, a timer circuit 28, and a warning circuit 30.

Live and neutral terminals 32, 34 are mounted at one end of the PCB 20 for connection with an incoming electrical cable, and outgoing load terminals 36, 38 are provided at the other end of the PCB 20. Electrical conductors 40 extend between the live terminal 32 and its respective outgoing load terminal 36, and similarly between the neutral terminal 34 and its respective outgoing load terminal 38. The earth conductor, which is not shown, is connected through from the supply to the load without being interrupted.

The switching device 22 includes a usually-open switch 42 which is mounted on the PCB 20 for access from outside of the housing 18, and a switch control device 44, in this case being a solenoid, which when energised holds contacts of the switch 42 together.

The sensing element 24 preferably is or includes a coil 46, such as a differential current transformer, which surrounds but is not electrically connected to the live and neutral conductors 40. The in use sensing element 24 senses a nonzero sum of currents between the said terminals 32, 34, 36, 38 or conductors 40.

The sensing circuit 26 receives a sensing signal which is outputted from the sensing element 24, and controls the switching device 22 accordingly.

A manual test function is also provided which includes an external test button 48 and a test circuit 50. The test button 48 activates the test circuit 50 to output a test signal to the sensing circuit 26 whereby the sensing circuit 26 deactivates the solenoid 44, thus allowing contacts of the switch 42 to separate and halting the flow of current.

The timer circuit 28 includes a countdown timer and a display 52 which is provided on an exterior face of the device housing 18. The countdown timer counts exactly three months, but may be settable to count other periods. The display 52 displays the period remaining, for example, in months, weeks, days, hours, minutes and/or seconds, as necessity dictates.

On expiry of the period, the timer circuit 28 outputs a test signal to the sensing circuit 26, replicating the occurrence of a nonzero sum of current between the live and neutral conductors 40. On receiving the test signal, the sensing circuit 26 controls the solenoid 44 of the switching device 22, resulting in the switch 42 opening and halting the flow of current.

To provide for the test signal to be outputted at a most convenient time of day, the timer circuit 28 includes a manual user interface 29, such as a touchscreen or button/keyboard interface, inputting to an adjustably settable clock circuit 31. Once the countdown timer expires, the test signal is then outputted at the specifically selected time of that day, thus causing the least amount of disruption to a user and/or business.

The timer circuit 28 may also include date circuitry 54 for displaying a date of the last test signal on the display 52.

The warning circuit 30 includes a warning device 56, which in this case includes an audible alert element 58 and/or a visual alert element 60. The audible alert element 58 comprises a speaker and an associated driver circuit, and the visual alert element 60 comprises a light emitting element, such as a light emitting diode or LED.

On outputting of the test signal by the timer circuit 28 to the sensing circuit 26, if the solenoid 44 is deenergised but the flow of current is not halted, the sensing circuit 26 determines that the switch 42 has not opened and thus mechanical freezing has occurred. In this case, a signal is outputted to the warning circuit 30, activating the audible alert element 58 to output an audible warning signal and the visual alert element 60 to output a visual warning signal.

Once the switch 42 is fixed and reset, the timer circuit 28 automatically restarts its countdown for the next period.

If the switch 42 is correctly operated by the timer circuit 28, then once the switch 42 is reset by a user, the timer circuit 28 automatically restarts its countdown for the next period. An audible alert, which may have a different signal or frequency, may be outputable to indicate to a user to reset the switch 42.

In a modification, the test signal is outputable from the timer circuit 28 to the warning circuit 30 to directly activate the warning device 22 without control of the switching device 22. In this case, therefore, the sensing circuit 26 is effectively bypassed. The audible and visual alert elements 58 and 60 output their warning signals, calling a user's attention to the fact that the switch 42 must be manually tested. The warning signal(s) is/are only halted on tripping of the switch 42, reset of the switch 42, and/or automatic restart of the timer circuit 28.

Since the residual current switching device 14 is adapted to fit within a standard consumer unit 10, it can be easily and quickly retrofitted to an existing unit.

It is thus possible to provide a residual current switching device which meets and exceeds current legislative standards and regulations. It provides a greater degree of safety for electrical systems, and alerts a user to potential defective operation. The residual current switching device also enables proactive planning of maintenance schedules, thus improving budgeting. The proactive planning also allows for testing at a predetermined time of the day, thereby minimising downtime and disruption.

The embodiments described above are provided by way of examples only, and various other modifications will be apparent to persons skilled in the art without departing from the scope of the invention as defined by the appended claims.

## Claims

1. A residual current switching device (14) comprising live and neutral terminals (32, 34), outgoing load terminals (36, 38) electrically communicable with the respective live and neutral terminals (32, 34), a switching device (22) between at least one of the live and neutral terminals (32, 34), and its respective outgoing load terminal (36, 38), a sensing element (24) for sensing a nonzero sum of currents between the said terminals (32, 34, 36, 38), a sensing circuit (26) for receiving a sensing signal from the sensing element (24), the sensing circuit (26) controlling the switching device (22) to open based on the sensing signal from the sensing element (24), a timer circuit (28) for automatically periodically outputting a test signal, **characterised in that** the timer circuit has a user interface (29) for manually setting a specific time of day that said periodic test signal is outputted, and a warning circuit (30) having a warning device (56) from which an alert signal is outputable following output of the test signal from the timer circuit (28).

2. A residual current switching device (14) as claimed in claim 1, wherein the timer circuit (28) outputs the test signal to the sensing circuit (26), the switching device (22) being controllable by the sensing circuit (26) to open based on the test signal, a warning signal being outputable by the sensing circuit to the warning circuit (30) to activate the warning device (56) if the switching device (22) does not open on outputting of the test signal from the timer circuit (28).

3. A residual current switching device (14) as claimed in claim 1, wherein the test signal is outputable from the timer circuit (28) to the warning circuit (30) to directly activate the warning device (56) without control of the switching device (22).

4. A residual current switching device (14) as claimed in any one of the preceding claims, wherein the timer circuit (28) includes a countdown timer and a display (52) for displaying a remaining period of the countdown timer to the outputting of the next test signal.

5. A residual current switching device (14) as claimed in any one of the preceding claims, wherein the timer circuit (28) includes date circuitry for displaying a date of the last test signal on the or a display (52).

6. A residual current switching device (14) as claimed in claim 4 or claim 5, further comprising a device housing (18) in or on which at least the switching device (22), sensing element (24), sensing circuit (26), and timer circuit (28) are housed, the display (52) being provided on a front face of the housing (18).

7. A residual current switching device (14) as claimed in claim 6, wherein the device housing (18) is adapted for connection to a DIN-rail (16).

8. A residual current switching device (14) as claimed in any one of the preceding claims, wherein the warning device (56) includes at least one of an audible alert element (58) and a visual alert element (60).

9. A residual current switching device (14) as claimed in any one of the preceding claims, further comprising a manual test circuit (50) having a manual test button (48) operable to manually control the switching device (22) to open.

10. A residual current switching device (14) as claimed in claim 9, wherein the timer circuit (28) automatically controls the manual test circuit (50) to output the test signal to the sensing circuit (26).

11. A residual current switching device (14) as claimed in any one of the preceding claims, wherein sensing element (24) is a coil (46).

12. A residual current switching device (14) as claimed in claim 11, wherein the coil (46) is a differential current transformer which surrounds but is not electrically connected to the live and neutral terminals (32, 34).

13. A residual current switching device (14) as claimed in any one of the preceding claims, wherein the switching device (22) includes a solenoid (44) and a switch (42), the solenoid (44) being electrically connected to the sensing circuit (26) and controlling the switch (42).

14. An electrical consumer unit (10) having a residual current switching device (14) as claimed in any one of the preceding claims.

15. An electrical consumer unit as claimed in claim 14, wherein the residual current switching device (14) is retro-fittable within a housing of the consumer unit (10).

## Patentansprüche

1. Fehlerstrom-Schutzschalter (14), umfassend Strom führende und neutrale Geräte, (32, 34) abgehende Ladegeräte (36, 38), die elektrisch mit den entsprechenden Strom führenden und neutralen Geräten (32, 34) verbunden werden können, einen Schutzschalter (22) zwischen mindestens einem der Strom führenden und neutralen Geräte (32, 34) und seinem entsprechenden abgehenden Ladegerät (36, 38), einen Messfühler (24) zur Messung einer von Null verschiedenen Summe von Strömen zwischen den Geräten (32, 34, 36, 38), eine Messschaltung (26) zum Empfang eines Messsignals vom Messfühler (24), wobei die Messschaltung (26) den Schutzschalter (22) steuert, um basierend auf dem Messsignal vom Messfühler (24) zu öffnen, eine Taktgeberschaltung (28), um automatisch periodisch ein Testsignal auszugeben, **dadurch gekennzeichnet, dass** die Taktgeberschaltung eine Benutzerschnittstelle (29) aufweist, um manuell eine spezifische Tageszeit einzustellen, zu der das periodische Testsignal ausgegeben wird, und eine Warnschaltung (30), die eine Warnvorrichtung (56) aufweist, aus der nach der Ausgabe des Testsignals von der Taktgeberschaltung (28) ein Warnsignal ausgegeben werden kann.

2. Fehlerstrom-Schutzschalter (14) nach Anspruch 1, wobei die Taktgeberschaltung (28) das Testsignal an die Messschaltung (26) ausgibt, wobei der Schutzschalter (22) durch die Messschaltung (26) gesteuert werden kann, um basierend auf dem Testsignal zu öffnen, wobei ein Warnsignal durch die Messschaltung an den Warnschaltkreis (30) ausgegeben werden kann, um die Warnvorrichtung (56) zu aktivieren, wenn der Schutzschalter (22) bei der Ausgabe des Testsignals von der Taktgeberschaltung (28) nicht öffnet.

3. Fehlerstrom-Schutzschalter (14) nach Anspruch 1, wobei das Testsignal von der Taktgeberschaltung (28) an die Warnschaltung (30) ausgegeben werden kann, um direkt die Warnvorrichtung (56) zu aktivieren, ohne die Steuerung des Schutzschalters (22).

4. Fehlerstrom-Schutzschalter (14) nach einem der vorhergehenden Ansprüche, wobei die Zeitgeberschaltung (28) einen rückzählenden Zeitgeber und eine Anzeige (52) umfasst, um einen verbleibenden Zeitraum des rückzählenden Zeitgebers zur Ausgabe des nächsten Testsignals anzuzeigen.

5. Fehlerstrom-Schutzschalter (14) nach einem der vorhergehenden Ansprüche, wobei die Zeitgeberschaltung (28) eine Datumsschaltung umfasst, um ein Datum des letzten Testsignals auf der oder auf einer Anzeige (52) anzuzeigen.

6. Fehlerstrom-Schutzschalter (14) nach Anspruch 4 oder Anspruch 5, weiter umfassend ein Vorrichtungsgehäuse (18), in oder auf dem mindestens der Schutzschalter (22), der Messfühler (24), die Messschaltung (26) und die Zeitgeberschaltung (28) untergebracht sind, wobei die Anzeige (52) auf einer vorderen Seite des Gehäuses (18) bereitgestellt ist.

7. Fehlerstrom-Schutzschalter (14) nach Anspruch 6, wobei das Vorrichtungsgehäuse (18) für die Verbindung an eine DIN-Schiene (16) ausgelegt ist.

8. Fehlerstrom-Schutzschalter (14) nach einem der vorhergehenden Ansprüche, wobei die Warnvorrichtung (56) mindestens eines eines hörbaren Warnelements (58) und eines visuellen Warnelements (60) umfasst.

9. Fehlerstrom-Schutzschalter (14) nach einem der vorhergehenden Ansprüche, weiter umfassend eine manuelle Testschaltung (50) mit einem manuellen Testknopf (48), der bedient werden kann, um die Schutzschaltung (22) manuell zu steuern, um zu öffnen.

10. Fehlerstrom-Schutzschalter (14) nach Anspruch 9, wobei die Taktgeberschaltung (28) automatisch die manuelle Testschaltung (50) steuert, um das Testsignal an die Messschaltung (26) auszugeben.

11. Fehlerstrom-Schutzschalter (14) nach einem der vorhergehenden Ansprüche, wobei der Messfühler (24) eine Spule (46) ist.

12. Fehlerstrom-Schutzschalter (14) nach Anspruch 11, wobei die Spule (46) ein Differenzstromwandler ist, der das Strom führende und das neutrale Gerät (32, 34) umgibt, jedoch nicht elektrisch damit verbunden ist.

13. Fehlerstrom-Schutzschalter (14) nach einem der vorhergehenden Ansprüche, wobei der Schutzschalter (22) eine Magnetspule (44) und einen Schalter (42) umfasst, wobei die Magnetspule (44) elektrisch mit der Messschaltung (26) verbunden ist und den Schalter (42) steuert.

14. Elektrische Verbrauchereinheit (10) mit einem Fehlerstrom-Schutzschalter (14) nach einem der vorhergehenden Ansprüche.

15. Elektrische Verbrauchereinheit nach Anspruch 14, wobei der Fehlerstrom-Schutzschalter (14) in einem Gehäuse der Verbrauchereinheit (10) nachrüstbar ist.

## Revendications

1. Dispositif de commutation de courant résiduel (14) qui comprend des bornes sous tension et neutres (32, 34), des bornes de charge sortante (36, 38) qui peuvent communiquer électriquement avec les bornes sous tension et neutres respectives (32, 34), un dispositif de commutation (22) entre au moins l'une desdites bornes sous tension et neutres (32, 34), et sa borne de charge sortante respective (36, 38), un élément de détection (24) destiné à détecter une somme non nulle de courants entre lesdites bornes (32, 34, 36, 38), un circuit de détection (26) destiné à recevoir un signal de détection de la part dudit élément de détection (24), ledit circuit de détection (26) contrôlant ledit dispositif de commutation (22) afin qu'il s'ouvre sur la base du signal de détection provenant dudit élément de détection (24), un circuit de temporisation (28) destiné à délivrer périodiquement et automatiquement un signal de test, **caractérisé en ce que** ledit circuit de temporisation possède une interface utilisateur (29) destinée à définir manuellement un moment spécifique de la journée auquel ledit signal de test périodique est délivré, et un circuit d'alerte (30) ayant un dispositif d'alerte (56) capable de fournir un signal d'alerte après la délivrance dudit signal de test par ledit circuit de temporisation (28).

2. Dispositif de commutation de courant résiduel (14) selon la revendication 1, dans lequel ledit circuit de temporisation (28) délivre ledit signal de test audit circuit de détection (26), ledit dispositif de commutation (22) pouvant être contrôlé par ledit circuit de détection (26) afin qu'il s'ouvre sur la base dudit signal de test, un signal d'alerte pouvant être fourni par ledit circuit de détection audit circuit d'alerte (30) afin d'activer ledit dispositif d'alerte (56) si ledit dispositif de commutation (22) ne s'ouvre pas lors de la délivrance dudit signal de test par ledit circuit de temporisation (28).

3. Dispositif de commutation de courant résiduel (14) selon la revendication 1, dans lequel ledit signal de test peut être fourni par ledit circuit de temporisation (28) audit circuit d'alerte (30) afin d'activer directement ledit dispositif d'alerte (56) sans contrôle dudit dispositif de commutation (22).

4. Dispositif de commutation de courant résiduel (14) selon l'une quelconque des revendications précédentes, dans lequel ledit circuit de temporisation (28) comprend un compteur à rebours et un écran (52) destiné à afficher la durée restante dudit compteur à rebours jusqu'à la délivrance du signal de test suivant.

5. Dispositif de commutation de courant résiduel (14) selon l'une quelconque des revendications précédentes, dans lequel ledit circuit de temporisation (28) comprend des circuits de datage destinés à afficher la date du dernier signal de test sur l'écran ou un écran (52).

6. Dispositif de commutation de courant résiduel (14) selon la revendication 4 ou 5, qui comprend en outre une enceinte de dispositif (18) dans ou sur laquelle ledit dispositif de commutation (22), ledit élément de détection (24), ledit circuit de détection (26), et ledit circuit de temporisation (28) au moins sont placés, ledit écran (52) étant prévu sur une face avant de ladite enceinte (18).

7. Dispositif de commutation de courant résiduel (14) selon la revendication 6, dans lequel ladite enceinte de dispositif (18) est adaptée pour être reliée à un rail DIN (16).

8. Dispositif de commutation de courant résiduel (14) selon l'une quelconque des revendications précédentes, dans lequel ledit dispositif d'alerte (56) comprend au moins l'un d'un élément d'alerte sonore (58) et d'un élément d'alerte visuel (60).

9. Dispositif de commutation de courant résiduel (14) selon l'une quelconque des revendications précédentes, qui comprend en outre un circuit de test manuel (50) ayant un bouton de test manuel (48) capable de contrôler manuellement ledit dispositif de commutation (22) afin qu'il s'ouvre.

10. Dispositif de commutation de courant résiduel (14) selon la revendication 9, dans lequel ledit circuit de temporisation (28) contrôle automatiquement ledit circuit de test manuel (50) afin de délivrer ledit signal de test audit circuit de détection (26).

11. Dispositif de commutation de courant résiduel (14) selon l'une quelconque des revendications précédentes, dans lequel ledit élément de détection (24) est une bobine (46).

12. Dispositif de commutation de courant résiduel (14) selon la revendication 11, dans lequel ladite bobine (46) est un transformateur de courant différentiel qui entoure mais n'est pas électriquement relié auxdites bornes sous tension et neutres (32, 34).

13. Dispositif de commutation de courant résiduel (14) selon l'une quelconque des revendications précédentes, dans lequel ledit dispositif de commutation (22) comprend un solénoïde (44) et un commutateur (42), ledit solénoïde (44) étant électriquement relié audit circuit de détection (26) et contrôlant ledit commutateur (42).

14. Unité électrique grand public (10) ayant un dispositif de commutation de courant résiduel (14) selon l'une quelconque des revendications précédentes.

15. Unité électrique grand public selon la revendication 14, dans laquelle ledit dispositif de commutation de courant résiduel (14) peut être installé dans une enceinte de ladite unité grand public (10).
